# FASCICULE DE BREVET EUROPEEN

(11) **EP 2 059 985 B1**
(45) Date de publication et mention de la délivrance du brevet: **19.12.2012**
(21) Numéro de dépôt: 07803815.5
(22) Date de dépôt: 29.06.2007
(51) Int. Cl.: H02G 3/08, H02G 3/12, H02G 3/14

(54) **MECANISME D'APPAREILLAGE A MONTER PAR L'ARRIERE D'UN SUPPORT D'APPAREILLAGE ET APPAREILLAGE ELECTRIQUE COMPRENANT UN TEL MECANISME**
INSTALLATIONSMECHANISMUS ZUR ANBRINGUNG HINTER EINER INSTALLATIONSHALTERUNG UND ELEKTRISCHE GERÄTE MIT EINEM SOLCHEN MECHANISMUS
INSTALLATION MECHANISM TO BE MOUNTED BEHIND AN INSTALLATION SUPPORT AND ELECTRICAL EQUIPMENT INCLUDING SUCH A MECHANISM

(30) Priorité: 23.08.2006 FR 0607464
(43) Date de publication de la demande: 20.05.2009
(73) Titulaire: Legrand France, 87000 Limoges (FR); Legrand SNC, 87000 Limoges (FR)
(72) Inventeur: GOUDAL, Jean-Paul, F-87000 Limoges (FR); MOREAU, Cédric, F-87700 Aixe sur Vienne (FR); NABOULET, Fabrice, F-87240 Saint Laurent des Eglises (FR); PECOUT, Maurice, F-87400 la Geneytouse (FR)
(74) Mandataire: Orsini, Fabienne
(86) Numéro de dépôt international: PCT/FR2007/001106
(87) Numéro de publication internationale: WO 2008/023102

(56) Documents cités:
- EP-A- 1 675 240
- AT-B- 408 165
- DE-U1- 20 007 505
- US-B1- 6 870 099

## Description

### DOMAINE TECHNIQUE AUQUEL SE RAPPORTE L'INVENTION

La présente invention concerne de manière générale les appareillages électriques tels que par exemple les interrupteurs, les va-et-vient et les prises de courant.

L'invention concerne plus particulièrement un mécanisme d'appareillage selon les caractéristiques du préambule de la revendication 1.

L'invention concerne également un appareillage électrique qui comporte un tel mécanisme d'appareillage.

### ARRIERE-PLAN TECHNOLOGIQUE

On connaît déjà un mécanisme d'appareillage du type précité dont le capot comporte sur deux parois latérales opposées deux dents d'accrochage prévues à l'extrémité de deux pattes de flexion rattachées au bord de la paroi frontale du capot.

Ce montage vise à limiter, dans un souci d'esthétisme, la hauteur de la partie avant de l'air l'appareillage électrique pour que celui ci, rapporté sur une paroi, soit relativement plat.

Plus particulièrement, lors du montage d'un tel mécanisme d'appareillage dans l'ouverture centrale du support d'appareillage, les pattes de flexion se déforment élastiquement au passage de l'ouverture centrale pour se rapprocher l'une de l'autre, puis elles reprennent leur position d'origine en appuyant leurs dents d'accrochage sur la face frontale du support d'appareillage.

La flexion des pattes doit permettre non seulement le montage du capot dans le support d'appareillage mais aussi l'absorption de chocs éventuels sur la face frontale du capot.

Pour permettre cette flexion, les pattes de flexion présentent une certaine longueur et le capot, une fois monté sur le support d'appareillage, forme alors une saillie encore relativement importante sur la face frontale du support d'appareillage.

Par ailleurs, on connaît du document EP 1 675 240, appartenant aux demanderesses, un mécanisme d'appareillage agencé pour être monté par la face avant d'un support d'appareillage. Ce mécanisme d'appareillage comporte un socle qui porte sur deux faces latérales opposées des dents d'encliquetage dont les faces d'accrochage sont tournées vers la face avant du socle et sont adaptées à s'accrocher sous le support d'appareillage sur une nervure d'accrochage qui fait saillie sur la face arrière de ce dernier.

### OBJET DE L'INVENTION

Par rapport à l'état de la technique précité l'invention propose un nouveau mécanisme d'appareillage standard qui, une fois monté sur le support d'appareillage, forme une faible saillie sur la face frontale dudit support d'appareillage et dont les moyens d'assemblage sur le support d'appareillage permettent son montage aisé sur celui-ci tout en résistant à des chocs frontaux sur le mécanisme.

À cet effet, on propose selon l'invention un mécanisme d'appareillage selon les caractéristiques de la revendication 1.

Ainsi, avantageusement, dans le mécanisme d'appareillage selon l'invention, la patte de flexion qui porte la dent d'accrochage s'étend à partir d'une région dite "arrière" du capot, c'est-à-dire une région destinée à se positionner en dessous du support d'appareillage, en direction d'une région dite "avant" dudit capot, c'est-à-dire une région destinée à se positionner au dessus du support d'appareillage.

La dent d'accrochage reste néanmoins située à proximité de la paroi frontale du capot de telle manière qu'elle s'accroche sur la face frontale du support d'appareillage.

Avantageusement, chaque patte de flexion présente une grande longueur alors que la hauteur de ladite région avant du capot est très limitée de manière à réaliser un appareillage électrique esthétiquement plat.

Cette longueur de patte de flexion permet à ladite patte de flexion de se déformer aisément pour faciliter le montage du mécanisme d'appareillage dans le support d'appareillage et absorber les chocs frontaux éventuels sur l'appareillage sans décrocher les dents du support d'appareillage.

D'autres caractéristiques avantageuses et non limitatives du mécanisme d'appareillage selon l'invention sont énumérées dans les revendications 2 à 7.

L'invention concerne également un appareillage électrique selon les caractéristiques de la revendication 8.

### DESCRIPTION DETAILLEE D'UN EXEMPLE DE REALISATION

La description qui va suivre en regard des dessins annexés d'un mode de réalisation, donné à titre d'exemple non limitatif, fera bien comprendre en quoi consiste l'invention et comment elle peut être réalisée.

Dans les dessins annexés :
- la figure 1 est une vue éclatée en perspective d'un mode de réalisation d'un appareillage électrique selon l'invention ;
- la figure 2 est une vue assemblée de l'appareillage électrique de la figure 1 ;
- la figure 3 est une vue en perspective de la face intérieure d'une patte de flexion du capot du mécanisme de l'appareillage électrique de la figure 1 ; et
- la figure 4 est une vue en perspective de la face extérieure de la patte de flexion représentée sur la figure 3.

En préliminaire, on notera que, d'une figure à l'autre, les éléments identiques ou similaires des différents modes de réalisation de l'invention, seront dans la mesure du possible référencés par les mêmes signes de référence et ne seront pas décrits à chaque fois.

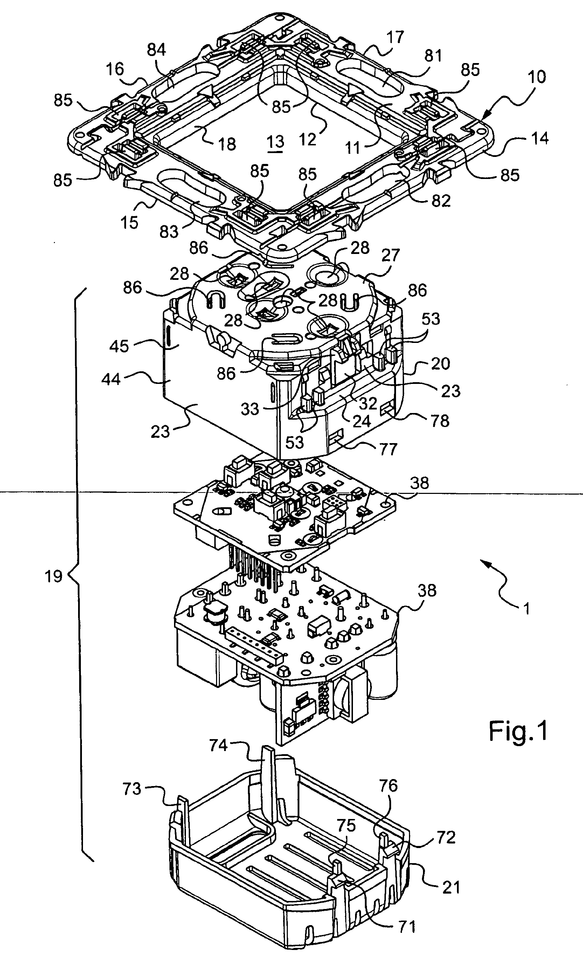

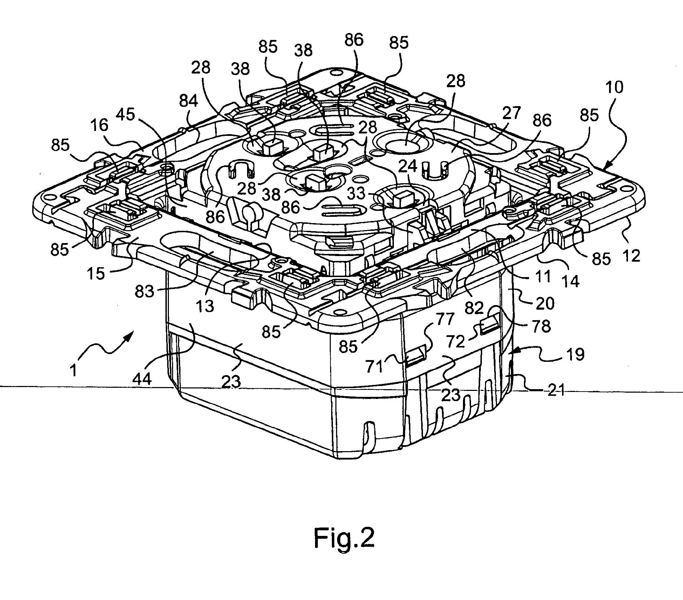

Sur les figures 1 et 2, on a représenté un appareillage électrique 1 qui comporte un mécanisme d'appareillage 19 et un support d'appareillage 10 pour le montage du mécanisme d'appareillage 19 dans une boîte d'encastrement (non représentée) qui est logée dans un orifice pratiqué dans une paroi (non représentée).

Le support d'appareillage 10 est un cadre plat, ici de forme carrée, pourvu de quatre branches 14,15,16,17 et d'une ouverture centrale 13 bordée d'un bord tombant 18 qui fait saillie du côté de la face arrière du support d'appareillage 10.

Le bord tombant 18 sert éventuellement à l'accrochage de dents d'un boîtier d'un autre mécanisme d'appareillage (non représenté sur les différentes figures) qui ne fait pas partie de l'invention et qui est adapté à être monté dans le support d'appareillage 10 par sa face frontale 11.

Le support d'appareillage 10 comporte, à l'avant, sur sa face frontale 11 des logements d'encliquetage 85 d'une plaque enjoliveur (non représentée). La plaque enjoliveur, appelée encore plaque de finition, est destinée à recouvrir la face frontale du support d'appareillage pour prendre appui sur la paroi d'encastrement. Elle est associée éventuellement à une ou plusieurs touches de commande recouvrant la face avant du mécanisme d'appareillage.

Le support d'appareillage 10 comporte dans chacune de ses branches 14,15,16,17 des ouvertures 81,82,83,84, en forme de trou de serrure, destinées à recevoir des vis pour fixer le support d'appareillage 10 à la boîte d'encastrement (non représentée).

Le mécanisme d'appareillage 19 comprend un boîtier 20,21 qui renferme intérieurement des éléments de connexion électrique 38 destinés à être reliés au réseau électrique.

Le boîtier 20,21 présente une forme parallélépipédique carrée destinée à s'insérer dans l'ouverture centrale 13 du support d'appareillage 10 sur lequel il est monté. Il comporte un socle 21 refermé par un capot 20. Le socle 21 forme la partie arrière du boîtier, il comporte un fond bordé par des parois latérales qui s'élèvent sensiblement perpendiculairement au fond. L'ouverture avant du socle 21 est fermée par le capot 20 qui forme la partie avant du boîtier.

Le capot 20 et le socle 21 comportent des moyens de montage complémentaires pour être assemblés l'un avec l'autre.

Ces moyens de montage complémentaires comprennent, d'une part, sur une face du socle 21, deux dents d'encliquetage 71,72 prévues à l'extrémité de deux montants s'élevant à partir du fond du socle 21 au-dessus du bord libre de la paroi latérale correspondante du socle, et, d'autre part, des ouvertures 77, 78 prévues dans une paroi latérale 23 du capot 20, à proximité du bord libre de ladite paroi latérale.

Bien entendu, on pourrait prévoir que les dents appartiennent au capot tandis que les ouvertures appartiennent au socle.

Outre les dents d'encliquetage 71,72, le socle 21 comporte intérieurement des montants de guidage 73,74,75,76 dont les extrémités sont adaptées à se loger dans des aménagements intérieurs (non représentés) du capot 20 pour assurer ainsi l'alignement du socle 21 et du capot 20 et la bonne tenue de l'assemblage de leurs moyens d'encliquetage.

Le capot 20 comporte une paroi frontale 27 qui est bordée sur ses côtés par quatre parois latérales 23. Deux de ses parois latérales 23 opposées sont pourvues de moyens d'accrochage au support d'appareillage 10.

La paroi frontale 27 du capot 20 est pourvue d'ouvertures 28 d'accès aux éléments de connexion électrique 38.

Les éléments de connection 38 sont ici des éléments électroniques programmables. Pour cela, ils sont positionnés sur un circuit imprimé et leur programmation est réalisée par des appuis successifs de touches qui sont formées par des languettes 86 découpées dans la paroi frontale 27 du capot 20.

Sur la figure 2, les éléments de connection 38 émergent de la paroi frontale 27 au travers des ouvertures 28 d'accès, de telle sorte qu'on puisse y avoir accès via une ou plusieurs touches de commande (non représentées) rapportées sur la paroi frontale 27 du capot 20 du mécanisme d'appareillage 19.

Le mécanisme d'appareillage 19 est agencé pour être monté par l'arrière du support d'appareillage 10.

Comme le montre plus particulièrement la figure 2, lorsqu'il est monté sur le support d'appareillage 10, le capot 20 présente une partie avant 45 de faible hauteur qui émerge de la face frontale 11 du support d'appareillage 10 et une partie arrière 44 qui s'étend en dessous de la face arrière du support d'appareillage 10 et qui est rattachée au socle 21.

Pour l'assemblage du boîtier 20,21 du mécanisme d'appareillage 19 et du support d'appareillage 10, le capot 20 comporte au moins une dent 33 qui fait saillie vers l'extérieur du boîtier 20,21 et qui est portée par une patte de flexion 32.

Ici, il est prévu deux dents 33 d'accrochage (dont une seule est visible sur les figures) qui font saillie de deux parois latérales 23 opposées du capot 20 et qui sont portées par deux pattes de flexion 32.

Chaque patte de flexion 32 s'étend sensiblement dans le plan de la paroi latérale 23 correspondante du capot 20 et est rattachée audit capot 20 par une extrémité de rattachement 31.

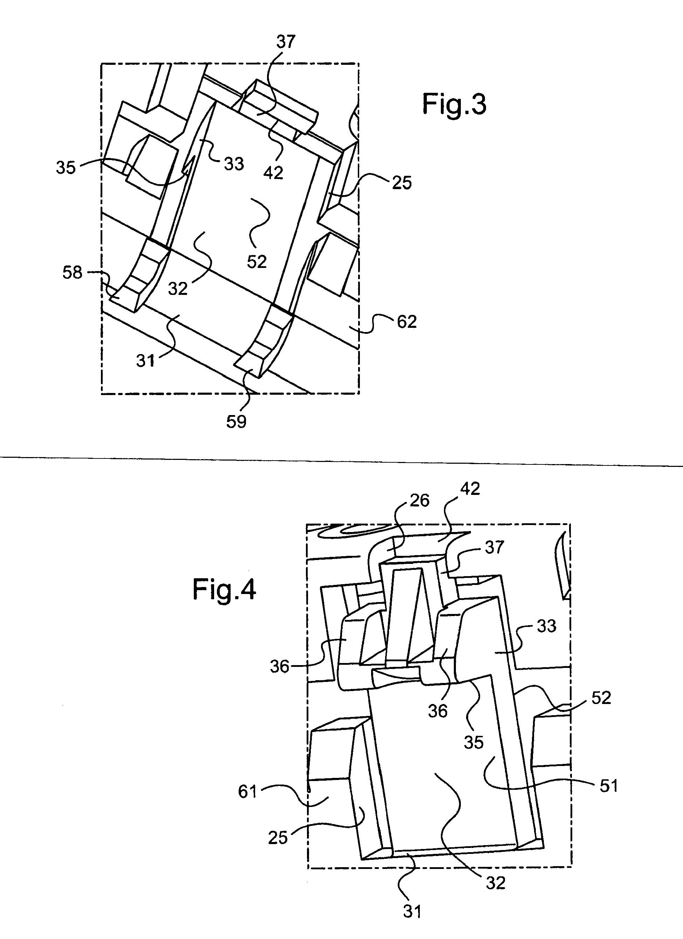

Ici, chaque patte de flexion 32 est rattachée au capot 20 par cette seule extrémité de rattachement 31 et comporte une extrémité libre 37 opposée (figures 3 et 4). Chaque dent 33 est placée à proximité de l'extrémité libre 37 de la patte de flexion 32.

Comme le montrent plus particulièrement les figures 3 et 4, chaque dent 33 comporte une face d'accrochage 35 tournée vers l'arrière du boîtier 20,21 du mécanisme d'appareillage 19 de sorte que, lors du montage dudit mécanisme d'appareillage 19 dans l'ouverture centrale 13 du support d'appareillage 10, cette face d'accrochage 35 est adaptée à prendre appui contre la face frontale 11 du support d'appareillage 10.

Selon une caractéristique particulièrement avantageuse, chaque patte de flexion 32 est rattachée par son extrémité de rattachement 31 à la partie arrière 44 du capot 20 et s'étend vers la paroi frontale 27 de celui-ci. Chaque patte de flexion 32 qui porte la dent 33 est logée dans une découpe 25 de la paroi latérale 23 du capot 20 à proximité de sa paroi frontale 27.

Ainsi, chaque dent 33 d'accrochage du capot 20 est située entre l'extrémité de rattachement 31 de la patte de flexion 32 correspondante et la paroi frontale 27 du capot 20.

Il en résulte que la saillie que forme la partie avant 45 du capot 20 sur la face frontale 11 du support d'appareillage 10 est de faible hauteur. En effet, la hauteur de la partie avant 45 du capot 20 correspond seulement sensiblement à la hauteur de chaque dent 33.

En outre, le fait de rattacher chaque patte de flexion 32 à la partie arrière 44 du capot 20 permet d'augmenter la longueur de ladite patte.

Ici, chaque patte de flexion 32 s'étend sur environ le tiers de la hauteur de la paroi latérale 23 correspondante du capot 20. En variante, chaque patte de flexion 32 peut s'étendre au-delà du tiers de la hauteur de la paroi latérale 23.

Le capot 20 et le socle 21 sont chacun formés d'une seule pièce par moulage en matière plastique.

Les pattes de flexion 32 et les dents 33 sont formées par moulage avec les parois latérales du capot 20.

Comme le montrent plus particulièrement les figures 3 et 4, chaque patte de flexion 32 logée dans la découpe 25 de la paroi latérale 23 correspondante du capot 20 s'inscrit dans le gabarit du capot 20. Elle présente, d'une part, une face extérieure 51 orientée vers l'extérieur du boîtier 20,21 qui forme une partie de la face extérieure 61 du capot 20 et, d'autre part, une face intérieure 52 qui forme une partie de la face intérieure 62 du capot 20.

L'extrémité de rattachement 31 de chaque patte de flexion 32 forme une charnière de pivotement qui permet à chaque patte de flexion 32 de pivoter légèrement vers l'intérieur du boîtier 20,21.

Comme représenté sur la figure 3, la face intérieure 62 de chaque paroi latérale 23 portant une patte de flexion 32 présente deux encoches 58, 59 qui sont situées de part et d'autre de l'extrémité de rattachement 31 de la patte de flexion 32. Bien entendu on peut prévoir une seule encoche.

Ces encoches 58, 59 augmentent l'effet de souplesse généré par la longueur de chaque patte de flexion 32. En effet, chaque patte de flexion 32 présente une souplesse propre qui lui permet de se courber élastiquement. En particulier, les encoches 58, 59 sont réalisées en arc de cercle autour de l'axe de pivotement de la patte de flexion 32, ce qui augmente les capacités de pivotement et de flexion de la patte de flexion 32.

Comme le montre plus particulièrement la figure 1, chaque paroi latérale 23 qui porte chaque patte de flexion 33 présente un décrochement à hauteur de l'extrémité de rattachement 31 de la patte de flexion 33. Le décrochement forme un rebord 24 extérieur tourné vers la paroi frontale du capot 20. Ce rebord 24 porte des plots 53 contre lesquels vient s'appuyer la tranche 12 du bord tombant 18 du support d'appareillage 10. Bien entendu les plots 53 viennent de moulage avec le capot 20.

Pour éviter que le capot 20 ne se désolidarise du support d'appareillage 10 lors d'un choc donné, l'extrémité libre 37 de chaque patte de flexion 32 rattachée à la paroi latérale 23 est logée dans un renfoncement 26 dont le fond forme une butée 42 pour la patte de flexion 32.

Ainsi, le capot 20 comporte une butée 42 disposée en vis-à-vis de la face intérieure 52 d'une partie de chaque patte de flexion 32 pour limiter son pivotement.

Plus particulièrement, lorsqu'un choc frontal est exercé sur la paroi frontale 27 du capot 20 en direction de la partie arrière 44 du capot 20, les pattes de flexion 32 qui portent les dents 33 pivotent et se rapprochent l'une de l'autre, ce qui a tendance à écarter les dents 33 de leur surface d'appui sur le support d'appareillage 10. Elles sont arrêtées par les butées 42, de telle sorte que les faces d'accrochage 35 des dents 33 restent en appui sur la face frontale 11 du support d'appareillage 10. Ainsi, il n'y a pas de démontage du mécanisme d'appareillage.

La distance entre la face intérieure 52 des pattes de flexion 32 et les butées 42 est définie de manière à permettre le montage et le démontage du boîtier 20,21 sur le support d'appareillage 10, tout en limitant le débattement des dents 33.

Lors du montage du boîtier 20,21 dans l'ouverture centrale 13 du support d'appareillage 10 par l'arrière, le bord tombant 18 du support d'appareillage 10 prend appui sur des pans inclinés 36 des dents 33, ce qui entraîne le pivotement des pattes de flexion 32 autour de l'axe de pivotement de leur extrémité de rattachement 31 (formant charnière de pivotement) vers l'intérieur du boîtier 20,21. Chaque patte de flexion 32 vient alors en appui contre la butée 42 formant le fond du renfoncement 26 du capot 20. Puis, lorsqu'on continue d'engager à force le boîtier 20,21 au travers de l'ouverture centrale 13 du support d'appareillage 10, chaque patte de flexion 32 en appui contre la butée 42, se courbe élastiquement de telle façon que sa concavité soit orientée vers l'extérieur du capot 20 (c'est-à-dire vers le bord du support d'appareillage 10) pour permettre à chaque dent 33 de traverser l'ouverture centrale 13 et d'émerger du côté de la face frontale 11 du support d'appareillage 10. Lorsque les dents 33 ont traversé l'ouverture centrale 13 du support d'appareillage 10, le retour élastique des pattes de flexion 32 dans leur position d'origine permet aux dents 33 de prendre appui avec leur face d'accrochage 35 sur la face frontale 11 du support d'appareillage 10.

Le capot 20 du mécanisme d'appareillage 19 est ainsi solidarisé au support d'appareillage 10, d'un côté par les dents 33 portées par les pattes de flexion 32 et, de l'autre, par les plots 53 qui appuient sur la tranche 12 du bord tombant 18.

Le support d'appareillage 10 qui est adapté notamment au montage par l'avant d'autres mécanismes d'appareillage (non représentés), reçoit aisément le mécanisme d'appareillage 19 selon l'invention qui est destiné à être monté par l'arrière.

On comprend ainsi que le mécanisme d'appareillage 19 selon l'invention est un mécanisme standard qui peut être monté sur différents supports d'appareillage 10.

Le support d'appareillage 10 utilisé peut être bimatière, métallique ou encore plastique.

La présente invention n'est nullement limitée aux modes de réalisation décrits et représentés, mais l'homme du métier saura y apporter toute variante conforme à son esprit.

En variante, les pattes de flexion peuvent être rapportées sur le capot.

## Revendications

1. Mécanisme d'appareillage (19) comprenant un boîtier (20,21) renfermant des éléments de connexion électrique (38), ledit boîtier (20,21) comportant un socle (20) refermé par un capot (20) avec une paroi frontale (27) pourvue d'ouvertures (28) d'accès aux éléments de connexion électrique (38), des parois latérales (23) qui bordent ladite paroi frontale (27) et au moins une dent (33)-, adaptée à s'accrocher sur la face frontale (11) du support d'appareillage (10), qui fait saillie vers l'extérieur du boîtier (20,21) et qui est portée par une patte de flexion (32) qui s'étend sensiblement dans le plan d'une des parois latérales (23) et qui est rattachée audit capot (20) par une extrémité de rattachement (31), chaque dent (33) étant située entre ladite extrémité de rattachement (31) de la patte de flexion (32) et ladite paroi frontale (27) du capot (20), **caractérisé en ce qu'**il est agencé pour être monté par l'arrière du support d'appareillage (10) et **en ce que** le capot (20) comporte une butée (42) disposée en vis-à-vis de la face intérieure (52) d'une partie de chaque patte de flexion (32) pour limiter son pivotement.

2. Mécanisme d'appareillage (19) selon la revendication précédente, **caractérisé en ce que** chaque patte de flexion (32) présente une souplesse propre qui lui autorise, lorsqu'elle est en appui contre ladite butée (42), de se courber légèrement de telle façon que sa concavité soit orientée vers l'extérieur du capot (20) pour permettre à chaque dent (33) de traverser l'ouverture centrale (13) du support d'appareillage (10) et d'émerger du côté de la face frontale (11) dudit support d'appareillage (10).

3. Mécanisme d'appareillage (19) selon l'une quelconque des revendications précédentes, **caractérisé en ce que** chaque patte de flexion (32) vient de formation avec le capot (20) de manière à être rattachée au capot (20) par une seule extrémité de rattachement (31) formant une charnière de pivotement et à présenter une extrémité libre (37) à proximité de laquelle la dent (33) est située.

4. Mécanisme d'appareillage (19) selon la revendication précédente, **caractérisé en ce que** la paroi latérale (23) présente dans sa face intérieure (62) deux encoches (58,59), situées de part et d'autre de ladite charnière de pivotement de la patte de flexion (32), accentuant la capacité de flexion de ladite patte de flexion (32).

5. Mécanisme d'appareillage (19) selon l'une quelconque des revendications précédentes, **caractérisé en ce que** chaque patte de flexion (32) s'étend sur une hauteur supérieure ou égale au tiers de la hauteur de la paroi latérale (23) correspondante du capot (20).

6. Mécanisme d'appareillage (19) selon l'une quelconque des revendications précédentes, **caractérisé en ce que** chaque dent (33) comporte au moins un pan incliné (36) qui forme une surface de guidage pour le montage du capot (20) sur ledit support d'appareillage (10).

7. Mécanisme d'appareillage (19) selon l'une quelconque des revendications précédentes, **caractérisé en ce que** le capot (20) comporte deux dents (33) rattachées à des parois latérales (23) opposées par deux pattes de flexion (32) qui s'étendent chacune sensiblement dans le plan de la paroi latérale (23) correspondante.

8. Appareillage électrique (1) qui comporte :
- un support d'appareillage (10) qui présente une face frontale (11) et une face arrière opposées, ainsi qu'une une ouverture centrale (13),
- un mécanisme d'appareillage selon l'une des revendications précédentes, apte à être monté dans l'ouverture centrale (13) du support d'appareillage (10) par sa face arrière de sorte que chaque dent (33) de son capot (20) appuie sur la face frontale (11) dudit support d'appareillage (10).

## Claims

1. An equipment mechanism (19) comprising a box (20, 21) containing electrical connection elements (38), said box (20, 21) comprising a base (21) closed by a cover (20) having a front wall (27) provided with openings (28) giving access to the electrical connection elements (38), side walls (23) around said front wall (27), and at least one tooth (33) adapted to catch on the front face (11) of the equipment support (10), said tooth projecting outwards from the box (20, 21) and being carried by a bendable tab (32) that extends substantially in the plane of one of the side walls (23) and that is attached to said cover (20) via a connection end (31), each tooth (33) being situated between said connection end (31) of the bendable tab (32) and said front wall (27) of the cover (20), the mechanism being **characterized in that** it is arranged to be mounted from the rear of an equipment support (10) and **in that** the cover (20) includes an abutment (42) placed facing the inside face (52) of a portion of each bendable tab (32) in order to limit pivoting thereof.

2. An equipment mechanism (19) according to the preceding claim, **characterized in that** each bendable tab (32) presents its own flexibility enabling it, when bearing against said abutment (42), to curve a little in such a manner that its concave side faces towards the outside of the cover (20) to enable each tooth (33) to pass through the central opening (13) of the equipment support (10) and emerge beside the front face (11) of said equipment support (10).

3. An equipment mechanism (19) according to any preceding claim, **characterized in that** each bendable tab (32) is formed integrally with the cover (20) in such a manner as to be connected to the cover (20) via a single connection end (31) forming a pivot hinge, and as to present a free end (37) close to which said tooth (33) is situated.

4. An equipment mechanism (19) according to the preceding claim, **characterized in that** the side wall (23) presents in its inside face (62) two notches (58, 59) situated on either side of said pivot hinge of the bendable tab (32), thereby increasing the ability of said bendable tab (32) to bend.

5. An equipment mechanism (19) according to any preceding claim, **characterized in that** each bendable tab (32) extends over a height that is greater than or equal to one-third of the height of the corresponding side wall (23) of the cover (20).

6. An equipment mechanism (19) according to any preceding claim, **characterized in that** each tooth (33) includes at least one inclined slope (36) forming a guide surface for mounting the cover (20) on said equipment support (10).

7. An equipment mechanism (19) according to any preceding claim, **characterized in that** the cover (20) includes two teeth (3) connected to two opposite side walls (23) by two bendable tabs (32), each extending substantially in the plane of the corresponding side wall (23).

8. Electrical equipment (1) comprising:
- an equipment support (10) presenting a front face (11) and an opposite rear face, together with a central opening (13); and
- an equipment mechanism according to any preceding claim, suitable for being mounted in the central opening (13) of the equipment support (10) via its rear face in such a manner that each tooth (33) of its cover (20) bears against the front face (11) of said equipment support (10).

## Patentansprüche

1. Gerätemechanismus (19) mit einem Gehäuse (20,21 ) und darin enthaltenen elektrischen Anschlusselementen (38), wobei das Gehäuse (20,21) einen Sockel (21) umfasst, der durch eine Abdeckung (20) mit einer Frontwand (27) mit Zugangsöffnungen (28) zu den elektrischen Anschlusselementen (38) abgedeckt ist, wobei die Abdeckung Seitenwände (23), die die Frontwand (27) umranden, und mindestens einen Zahn (33) umfasst, der sich an der Frontseite (11) der Gerätehalterung (10) einhängen kann und zur Außenseite des Gehäuses (20,21) hin übersteht und von einer Biegehalterung (32), die sich annäherend in der Ebene einer der Seitenwände (23) erstreckt und an der Abdeckung (20) durch ein Einhängende (31) eingehängt ist, gehalten wird, wobei sich jeder Zahn (33) zwischen dem Einhängende (31) der Biegehalterung (32) und der Frontwand (27) der Abdeckung (20) befindet, **dadurch gekennzeichnet, dass** er angeordnet ist, um von der Hinterseite der Gerätehalterung (10) montiert zu werden und dadurch, dass die Abdeckung (20) einen gegenüber der Innenseite (52) eines Teils jeder Biegehalterung (32) gelegenen Anschlag (42) umfasst, um ihr Schwenken einzuschränken.

2. Gerätemechanismus (19) nach vorausgehendem Anspruch, **dadurch gekennzeichnet, dass** jede Biegehalterung (32) eine spezifische Flexibilität aufweist, die ihr ermöglicht, wenn sie am Anschlag (42) aufliegt, sich leicht zu krümmen, sodass ihre Konkavität zur Außenseite der Abdeckung (20) gerichtet ist, damit jeder Zahn (33) die mittlere Öffnung (13) der Gerätehalterung (10) durchqueren und auf der Frontseite (11) der Gerätehalterung (10) herausragen kann.

3. Gerätemechanismus (19) nach einem der vorausgehenden Ansprüche, **dadurch gekennzeichnet, dass** jede Biegehalterung (32) derart zusammen mit der Abdeckung (20) gebildet wird, dass sie mit einem einzigen Einhängende (31) an der Abdeckung (20) eingehängt werden kann, wobei das Einhängende ein Scharnier bildet und ein freies Ende (37) aufweist, in dessen Nähe sich der Zahn (33) befindet.

4. Gerätemechanismus (19) nach vorausgehendem Anspruch, **dadurch gekennzeichnet, dass** die Seitenwand (23) auf ihrer Innenseite (62) zwei Nuten (58, 59) auf beiden Seiten des Scharniers der Biegehalterung (32) aufweist, die die Flexibilität der Biegehalterung (32) noch erhöhen.

5. Gerätemechanismus (19) nach einem der vorausgehenden Ansprüche, **dadurch gekennzeichnet, dass** sich jede Biegehalterung (32) auf einer Höhe erstreckt, die größer gleich einem Drittel der Höhe der entsprechenden Seitenwand (23) der Abdeckung (20) ist.

6. Gerätemechanismus (19) nach einem der vorausgehenden Ansprüche, **dadurch gekennzeichnet, dass** jeder Zahn (33) mindestens eine schräge Seite (36) umfasst, die eine Führungsfläche für die Montage der Abdeckung (20) auf der Gerätehalterung (10) bildet.

7. Gerätemechanismus (19) nach einem der vorausgehenden Ansprüche, **dadurch gekennzeichnet, dass** die Abdeckung (20) zwei Zähne (33) umfasst, die mit zwei Biegehalterungen (32) in gegenüberliegende Seitenwände (23) eingehängt sind, wobei sich die Biegehalterungen jeweils annähernd in der Ebene der entsprechenden Seitenwand (23) erstrecken.

8. Elektrische Gerätschaft (1), die umfasst:
- eine Gerätehalterung (10) mit einer Frontseite (11) und einer gegenüberliegenden Rückseite sowie einer zentralen Öffnung (13),
- einen Gerätemechanismus nach einem der vorausgehenden Ansprüche, der derart über seine Rückseite in die zentrale Öffnung (13) der Gerätehalterung (10) montiert werden kann, dass jeder Zahn (33) seiner Abdeckung (20) auf der Frontseite (11) der Gerätehalterung (10) aufliegt.
